# EUROPÄISCHE PATENTSCHRIFT

(11) **EP 3 298 603 B1**
(45) Veröffentlichungstag und Bekanntmachung des Hinweises auf die Patenterteilung: **27.10.2021**
(21) Anmeldenummer: 16724591.9
(22) Anmeldetag: 14.05.2016
(51) Int. Cl.: G08G 1/0967, G08G 1/01, G07C 5/08, G07C 5/00, G09B 29/10

(54) **GEOGRAPHISCHE FEHLERQUELLENLOKALISATION FÜR KRAFTFAHRZEUGE**
GEOGRAPHICALLY LOCATING MALFUNCTION SOURCES FOR MOTOR VEHICLES
LOCALISATION DE SOURCES GÉOGRAPHIQUES D'ERREUR POUR VÉHICULES AUTOMOBILES

(30) Priorität: 22.05.2015 DE 102015006676
(43) Veröffentlichungstag der Anmeldung: 28.03.2018
(73) Patentinhaber: Audi AG, 85045 Ingolstadt (DE)
(72) Erfinder: BUCHHOLZ, Jan, 84030 Ergolding (DE); ENGEL, Sebastian, 85049 Ingolstadt (DE); HOHLSTEIN, Björn, 38176 Wendeburg (DE)
(86) Internationale Anmeldenummer: PCT/EP2016/000800
(87) Internationale Veröffentlichungsnummer: WO 2016/188615

(56) Entgegenhaltungen:
- DE-A1-102009 053 753
- DE-A1-102010 051 040
- DE-A1-102013 200 731
- DE-A1-102014 114 084

## Beschreibung

Die Erfindung betrifft ein Verfahren zum geographischen Lokalisieren von Auslösern für Fehlfunktionen in Kraftfahrzeugen. Insbesondere wird ermittelt, an welchen geographischen Orten Marder Kraftfahrzeuge beschädigen. Die Erfindung stellt eine Weiterbildung eines Verfahrens gemäß der DE 10 2013 200 731 A1 dar.

Gemäß dem aus dem Stand der Technik bekannten Verfahren wird von einem Zielfahrzeug dessen Ort und die aktuelle Zeit empfangen und in einer Datenbank nach mindestens einem Eintrag für einen zuvor aufgetretenen Schaden an einem anderen Kraftfahrzeug an dem bestimmten Ort und/oder dessen Umgebung gesucht. Es wird dann die Gefährdung des Zielfahrzeugs basierend auf dem bestimmten Ort und der bestimmten Zeit geschätzt und in dem Zielfahrzeug ein Hinweis auf die Gefährdung ausgegeben, wenn der geschätzte Wert einen Schwellenwert überschreitet. Zum Bilden der Datenbank werden Erkenntnisse aus der Unfallforschung, Unfallstreckenkarten der Polizei, geographisch erfasste Kasko- und Haftpflichtschäden der Versicherungswirtschaft und Daten der Unfallforschung von Automobilclubs und Fahrzeugherstellern genutzt.

Im Zusammenhang mit der geographischen Lokalisierung von Auslösern für Fehlfunktionen in Kraftfahrzeugen, die das Kraftfahrzeug während einer Parkphase beschädigen, hat man folgendes Problem beobachtet. Eine Beschädigung eines Kraftfahrzeugs durch einen Marder oder durch Frost oder intensive Sonneneinstrahlung führt in der Regel nicht dazu, dass das Kraftfahrzeug fahruntauglich wird. Vielmehr benutzt der Fahrer das Kraftfahrzeug nach der Parkphase und stellt während der Fahrt fest, dass eine Überwachungseinrichtung des Kraftfahrzeugs, also dessen On-Board-Diagnoseeinrichtung, eine Fehlfunktion des Kraftfahrzeugs anzeigt. Beispielsweise kann eine Warnleuchte aktiviert sein. Der Fahrer wird dann bei nächster Gelegenheit eine Werkstatt aufsuchen und die Fehlfunktion untersuchen lassen. Wird dann in der Werkstatt festgestellt, dass es sich um eine Fehlfunktion handelt, die während einer Parkphase entstanden sein muss, wie beispielsweise ein Marderbiss oder eine aufgrund von Frost geplatzte Leitung, so kann der Fahrer in der Regel nicht rekonstruieren, wo das Kraftfahrzeug beschädigt wurde, weil er sich nicht gemerkt hat, wo er das Kraftfahrzeug in den letzten Tagen überall geparkt hat. Damit wird das Erstellen einer genauen Datenbank, wie sie im Stand der Technik benötigt wird, erschwert.

Im Zusammenhang mit dem Warnen eines Fahrers eines Zielfahrzeug vor einer Gefahr durch Wildwechsel ist aus der DE 10 2004 050 597 A1 eine Wildwechselwarnvorrichtung bekannt, die in einem Kraftfahrzeug bereitgestellt werden kann und Wild mittels eines Sensorsystems erfasst. Des Weiteren sind Mittel vorgesehen, die zur Bestimmung eines Gefahrenpotentials für einen Wildwechsel auf Basis der Ergebnisse der Sensorsysteme sowie weiterer bereitgestellter Daten ausgebildet sind.

Aus der DE 10 2012 025 364 A1 ist ein Verfahren zum Erzeugen einer Warnung betreffend einen Wildwechsel für ein Kraftfahrzeug bekannt. Bei diesem Verfahren werden von einer Recheneinheit Daten über die Bewegung des Kraftfahrzeugs ermittelt und auf die Daten über die Bewegung des Kraftfahrzeugs bezogene Daten über einen Wildwechsel von einer Datenbank abgerufen. Daraus wird ein Risiko für das Kraftfahrzeug vor einem Wildwechsel ermittelt.

Die DE 10 2010 051 040 A1 beschreibt ein Verfahren zur Fehlerdiagnose bei einem Kraftfahrzeug und ein Diagnosesystem für ein Kraftfahrzeug. In dem Verfahren ist es vorgesehen, dass durch eine Fehlererfassungseinheit des Kraftfahrzeugs ein Fehler einer Funktionskomponente des Kraftfahrzeugs automatisch erfasst wird. Eine zumindest den Fehler sowie die geographische Position des Kraftfahrzeugs umfassende Information wird an eine fahrzeugexterne Auswerteeinheit zur Diagnose übermittelt.

Die DE 10 2009 053 753 A1 beschreibt ein Verfahren zum Ermitteln der Ursache eines Fehlers an einem Kraftfahrzeug mit Hilfe einer kraftfahrzeugexternen Diagnoseeinrichtung.

Der Erfindung liegt die Aufgabe zugrunde, Auslöser für Fehlfunktionen in einem Kraftfahrzeug zuverlässig geographisch zu lokalisieren.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Die Erfindung umfasst ein Verfahren zum geographischen Lokalisieren von Auslösern für Fehlfunktionen in Kraftfahrzeugen. Ein solcher Auslöser kann beispielsweise ein Marder sein oder ein frostgefährdeter Parkplatz oder ein Parkplatz mit intensiver Sonnenbestrahlung. Das Verfahren nutzt mehrere Kraftfahrzeuge als Informationsquellen. In jedem der Kraftfahrzeuge wird durch die jeweilige Überwachungseinrichtung des Kraftfahrzeugs eine Fehlfunktion des Kraftfahrzeugs detektiert. Eine solche Überwachungseinrichtung ist in Kraftfahrzeugen aus dem Stand der Technik verfügbar, beispielsweise als sogenannte On-Board-Diagnose. Eine Fehlfunktion kann beispielsweise ein Motorschaden oder ein zu geringer Flüssigkeitsdruck beispielsweise von Öl oder Kühlflüssigkeit sein. In einem Fehlerspeicher wird ein Fehlereintrag erzeugt, der die Fehlfunktion beschreibt. Bei dem Fehlerspeicher kann es sich um einen an sich aus dem Stand der Technik bekannten Fehlerspeicher für die Fehlerdiagnose eines Kraftfahrzeugs handeln.

Erfindungsgemäß wird zusätzlich eine Geoposition des Kraftfahrzeugs durch eine Lokalisierungseinrichtung des Kraftfahrzeugs erfasst und gespeichert. Die Lokalisierungseinrichtung kann beispielsweise ein Signal eines GNSS (Global Navigation Satellite System) empfangen und daraus die Geoposition ermittelt. Ein Beispiel für ein GNSS ist das GPS (Global Positioning System). In den Kraftfahrzeugen ist somit zu jeder Fehlfunktion ein Fehlereintrag gespeichert und in jedem Kraftfahrzeug ist eine Geoposition des Kraftfahrzeugs gespeichert. Später bei einer Fehlerdiagnose der Kraftfahrzeuge, beispielsweise in einer jeweiligen Werkstatt, in welche das jeweilige Kraftfahrzeug gebracht wurde, werden die Fehlereinträge aus den Fehlerspeichern der Kraftfahrzeuge ausgelesen. Dies geschieht durch eine fahrzeugexterne Analyseeinrichtung, die hierfür beispielsweise über Auslesegeräte mit den Kraftfahrzeugen gekoppelt werden kann. Zu jedem Fehlereintrag wird eine den jeweiligen Auslöser der Fehlfunktion beschreibende Auslöserklasse empfangen. Mit anderen Worten wird der jeweilige Grund für jede Fehlfunktion ermittelt. Beispielsweise kann als Auslöserklasse angegeben werden, dass die Fehlfunktion durch einen Marderbiss oder durch einen Frostschaden oder durch einen Hitzeschaden verursacht wurde. Für jede Auslöserklasse (Marderbiss, Frostschaden, Hitzeschaden) kann eine jeweilige digitale Karte bereitgestellt werden. Das Verfahren sieht vor, die Geoposition der Kraftfahrzeuge mit Fehlfunktionen derselben Auslöserklasse in der zugehörigen digitalen Karte für die Auslöserklasse zu speichern. Mit anderen Worten wird kartographiert, wo sich all diejenigen Kraftfahrzeuge aufgehalten haben, bei denen eine Fehlfunktion aufgrund derselben Auslöserklasse (beispielsweise Marderbiss) erkannt wurde oder aufgetreten ist.

Durch die Erfindung ergibt sich der Vorteil, dass zu zumindest einer Auslöserklasse eine digitale Karte generiert wird, indem bei Auftreten einer Fehlfunktion zusätzlich die Geoposition des Kraftfahrzeugs bereitgestellt wird, anhand welcher der Auslöser der Fehlfunktion lokalisiert werden kann.

Es ist vorgesehen, dass die Geoposition während einer Parkphase des Kraftfahrzeugs erfasst und gespeichert wird. Mit anderen Worten wird gespeichert, wo das Kraftfahrzeug zuletzt geparkt war. Hierdurch ergibt sich der Vorteil, dass auch dann eine Geoposition korrekt ermittelt wird, wenn durch den Auslöser, beispielsweise einen Marderbiss, eine Beschädigung des Kraftfahrzeugs verursacht wurde, durch die sich die Fehlfunktion erst später, während des Fahrbetriebs des Kraftfahrzeugs, ergibt oder zeigt. Es kann beispielsweise vorkommen, wenn durch ein Leck ein Betriebsfluid des Kraftfahrzeugs austritt und die Fehlfunktion erst ab einer vorbestimmten Menge an Fluidverlust detektiert wird.

Durch die Überwachungseinrichtung wird die Geoposition in dem Fehlereintrag gespeichert. Mit anderen Worten werden in dem Fehlerspeicher die Fehlfunktion und die Geoposition zusammen als ein Fehlereintrag abgespeichert. Hierdurch ergibt sich der Vorteil, dass universell zu allen Fehlereinträgen des Kraftfahrzeugs die Geoposition des Kraftfahrzeugs bereitgestellt wird. Hierdurch kann ein Hersteller des Kraftfahrzeugs auf strukturelle und/oder immanente Schwächen oder Anfälligkeiten eines Fahrzeugmodells des Kraftfahrzeugs rückschließen, indem zu Kraftfahrzeugen desselben Fahrzeugtyps an ähnlichen geographischen Positionen, beispielsweise auf Schotterwegen oder in kalten Regionen, dieselben Fehlfunktionen erkannt und detektiert werden.

Zu der Erfindung gehören auch optionale Weiterbildungen, durch deren Merkmale sich zusätzliche Vorteile ergeben.

Gemäß einer Weiterbildung wird die genannte Geoposition bei Detektieren der Fehlfunktion ermittelt. Mit anderen Worten wird zu demjenigen geographischen Ort die Position des Kraftfahrzeugs ermittelt, an welchem sich das Kraftfahrzeug aufhielt, während die Fehlfunktion detektiert wurde. Hierdurch können Auslöser kartographiert werden, welche die Fehlfunktion während einer Fahrt des Kraftfahrzeugs verursachen. Dies können beispielsweise Schlaglöcher sein, durch welche das Kraftfahrzeug fährt und hierbei beschädigt wird.

Gemäß einer Weiterbildung wird die Detektion der Fehlfunktion bei einem Motorstart des Kraftfahrzeugs und/oder bei einem Aktivieren der Zündung des Kraftfahrzeugs durchgeführt. Hierdurch ergibt sich der Vorteil, dass die Fehlfunktion zuverlässig dem vorangegangenen Parkvorgang zugeordnet werden kann. Mit anderen Worten wird hierdurch eine Veränderung des Kraftfahrzeugs, durch die sich die Fehlfunktion ergibt, eindeutig der Parkphase zugehörig erkannt. Gemäß einer Weiterbildung wird hierbei nach der Parkphase die Detektion der Fehlfunktion nur durchgeführt, wenn die Parkphase eine vorbestimmte Mindestdauer aufweist. Die Parkphase kennzeichnet sich durch einen abgeschalteten Antriebsmotor des Kraftfahrzeugs. Mit anderen Worten ist während der Parkphase die Zündung des Kraftfahrzeugs ausgeschaltet. Durch Berücksichtigen einer Mindestdauer ergibt sich der Vorteil, dass kurze Zwischenstopps, während welchen die Beschädigung eines Kraftfahrzeugs durch einen Auslöser, wie beispielsweise einen Marder oder Frost, unwahrscheinlich ist, nicht irrtümlich als Geoposition eines Auslösers erkannt werden.

Wie bereits beschrieben, muss die Fehlfunktion noch einer Auslöserklasse zugeordnet werden, um mehrere unterschiedliche Fehlfunktionen, die durch ein und denselben Auslöser verursacht werden können, auch zuverlässig demselben Auslöser zuzuordnen. Beispielsweise kann ein Marder im Motorraum eines Kraftfahrzeugs mehrere unterschiedliche Komponenten beschädigen, durch deren Defekt sich wiederum unterschiedliche Fehlfunktionen ergeben. Durch Zuordnen einer Auslöserklasse zu den Fehlfunktionen werden die unterschiedlichen Fehlfunktionen ein und derselben Auslöserklasse, beispielsweise Marderbiss, zugeordnet. Gemäß einer Weiterbildung wird die Auslöserklasse über eine manuelle Eingabeeinrichtung von einer Bedienperson der Analyseeinrichtung empfangen. Mit anderen Worten wird einer Bedienperson, beispielsweise einem Mechaniker in einer Werkstatt, die Möglichkeit gegeben, eine erkannte Fehlerursache als Auslöserklasse in die Analyseeinrichtung einzugeben. Die Analyseeinrichtung kann hierzu beispielsweise mit Eingabegeräten in mehreren Werkstätten gekoppelt sein. Die Analyseeinrichtung kann also eine zentrale Recheneinrichtung umfassen, die mit den Eingabegeräten und/oder den bereits beschriebenen Diagnosegeräten gekoppelt ist. In der zentralen Recheneinrichtung können auch die Geopositionen in eine digitale Karte eingetragen werden. Durch Bereitstellen einer manuellen Eingabeeinrichtung ergibt sich der Vorteil, dass auch nicht automatisch klassifizierbare Fehlerquellen ausgewertet werden können. Beispielsweise können Bissspuren eines Marders nicht oder nur mit unverhältnismäßig großem technischen Aufwand automatisiert erkannt werden.

Die bisher beschriebenen Kraftfahrzeuge stellen Informationsquellen zum Lokalisieren der Auslöser dar.

Gemäß einer Weiterbildung wird die digitale Karte mit den Geopositionen der Auslöser dann zum Warnen eines Fahrers eines Fahrzeugs benutzt. Ein solches Fahrzeug, das nicht eine Informationsquelle, sondern ein die Analyseeinrichtung nutzendes Fahrzeug darstellt, wird als Zielfahrzeug bezeichnet.

Gemäß einer Weiterbildung wird bei dem Zielfahrzeug eine Parkabsicht erkannt und zu einer Geoposition eines voraussichtlichen Parkplatzes des Zielfahrzeugs dann in der digitalen Karte zumindest einer Auslöserklasse eine Anwesenheit eines Auslösers detektiert. Mit anderen Worten wird überprüft, ob das Zielfahrzeug beabsichtigt, auf einem Parkplatz zu parken, an dem oder in dessen Umgebung ein Auslöser beobachtet wurde. Beispielsweise kann überprüft werden, ob Marder in der Nähe des Parkplatzes beobachtet wurden. Bei anwesendem Auslöser wird ein Hinweis in dem Zielfahrzeug ausgegeben. Der Fahrer des Zielfahrzeugs kann dann selbst entscheiden, ob er das Risiko eingehen möchte oder ob er sich lieber einen anderen Parkplatz sucht. Zum Erkennen der Parkabsicht kann auf eine Detektionseinrichtung zurückgegriffen werden, die in der DE 10 2013 015 704 A1 beschrieben ist.

Wie bereits ausgeführt, stellt eine bevorzugte Auslöserklasse einen Marderbiss dar. Ein solcher Marderbiss wird durch einen Marder als Auslöser verursacht. Die digitale Karte für Marderbisse zeigt oder beinhaltet somit Geopositionen solcher Kraftfahrzeuge, bei denen es zu einer Fehlfunktion aufgrund eines jeweiligen Marderbisses gekommen ist. Durch Ermitteln der Reviergrenzen ergibt sich der Vorteil, dass für einen geographischen Bereich ein Hinweis auf ein Risiko eines Marderbisses gegeben werden kann, an welchem bisher noch kein Marderbiss beobachtet worden ist.

Gemäß einer Weiterbildung wird auf Grundlage einer Clusteranalyse in der digitalen Karte der Auslöserklasse "Marderbiss" eine Reviergrenze eines jeweiligen Marderreviers zumindest eines Marders ermittelt. Das Marderrevier wird dann als Gebiet markiert, in welchem ein Auslöser anwesend ist. Mittels einer Clusteranalyse werden somit Häufungen von Geopositionen ermittelt, die ein und demselben Tier zugeordnet werden können. Eine geeignete Clusteranalyse ist beispielsweise mittels des k-Means-Algorithmus durchführbar. Allgemein können Algorithmen aus dem Fachgebiet "Datamining" zum Ermitteln von Reviergrenzen genutzt werden.

Zusätzlich oder alternativ zur Clusteranalyse können Verhaltensdaten von Mardern beim Ermitteln der Reviergrenze zugrundegelegt werden. Durch die Verhaltensdaten kann beispielsweise angegeben sein, welche Reviergrößen Marder bevorzugen. Des Weiteren kann beispielsweise ein Revierverhalten eines Marders beschrieben sein, durch welches angegeben ist, in welchen Bewegungsmustern räumlich und/oder zeitlich ein Marder sein Revier durchstreift. Das Berücksichtigen von Verhaltensdaten ergibt den Vorteil, dass die Reviergrenzen besonders plausibel sind, weil sie das natürliche Verhalten und Können von Mardern berücksichtigen.

Gemäß einer Weiterbildung wird in der digitalen Karte ein Überlappungsbereich zweier überlappender Marderreviere ermittelt. Der Überlappungsbereich wird dann als Gebiet markiert, in welchem ein Risiko für einen Marderbiss größer ist als in einem überlappungsfreien Marderrevier. Hierdurch ergibt sich der Vorteil, dass das natürliche Verhalten von Mardern berücksichtigt ist, die in überlappenden Reviergebieten besonders intensiv dazu neigen, Schäden an Kraftfahrzeugen zu verursachen. Als Grund dafür wird vermutet, dass Marderbisse der Reviermarkierung dienen.

Zu der Erfindung gehört auch ein Kraftfahrzeug, das besonders vorteilhafte Merkmale aufweist, durch welche die beschriebene geographische Lokalisation von Auslösern für Fehlfunktionen in Kraftfahrzeugen durchgeführt werden kann. Das Kraftfahrzeug weist in an sich bekannter Weise eine Überwachungseinrichtung zum Detektieren einer Fehlfunktion des Kraftfahrzeugs und einen Fehlerspeicher zum Speichern eines die Fehlfunktion beschreibenden Fehlereintrags auf. Des Weiteren ist in an sich bekannter Weise eine Lokalisierungseinrichtung zum Erfassen einer Geoposition des Kraftfahrzeugs bereitgestellt, also beispielsweise ein GPS-Sensor. Bei dem erfindungsgemäßen Kraftfahrzeug ist die Überwachungseinrichtung zusätzlich dazu ausgelegt, bei Detektieren der Fehlfunktion ein Anforderungssignal zu erzeugen. Des Weiteren ist die Lokalisierungseinrichtung dazu ausgelegt, in Abhängigkeit von dem Anforderungssignal eine aktuelle Geoposition des Kraftfahrzeugs und/oder eine vom Kraftfahrzeug bei einer letzten Parkphase eingenommene Geoposition bereitzustellen. Bei dem erfindungsgemäßen Kraftfahrzeug ergibt sich der Vorteil, dass bei Erkennen einer Fehlfunktion dieser Fehlfunktion auch ein geographischer Ort zugeordnet werden kann, nämlich die aktuelle Geoposition des Kraftfahrzeugs und/oder die zuletzt während einer Parkphase eingenommene Geoposition. Dies ermöglicht in der beschriebenen Weise das Kartographieren von Fehlerereignissen. Durch das zusätzliche gemäß dem Verfahren vorgesehene Klassifizieren der Fehlfunktionen in Auslöserklassen lassen sich dann Schadensquellen oder Auslöser für die Fehlfunktionen in einer digitalen Karte kartographieren.

Das erfindungsgemäße Kraftfahrzeug ist bevorzugt als Kraftwagen, insbesondere als Personenkraftwagen, ausgestaltet.

Durch die beschriebene Analyseeinrichtung und durch eine Mehrzahl von Kraftfahrzeugen, die jeweils eine Ausführungsform des erfindungsgemäßen Kraftfahrzeugs darstellen, ist insgesamt ein Lokalisierungssystem gebildet, welches ebenfalls als Bestandteil der Erfindung anzusehen ist.

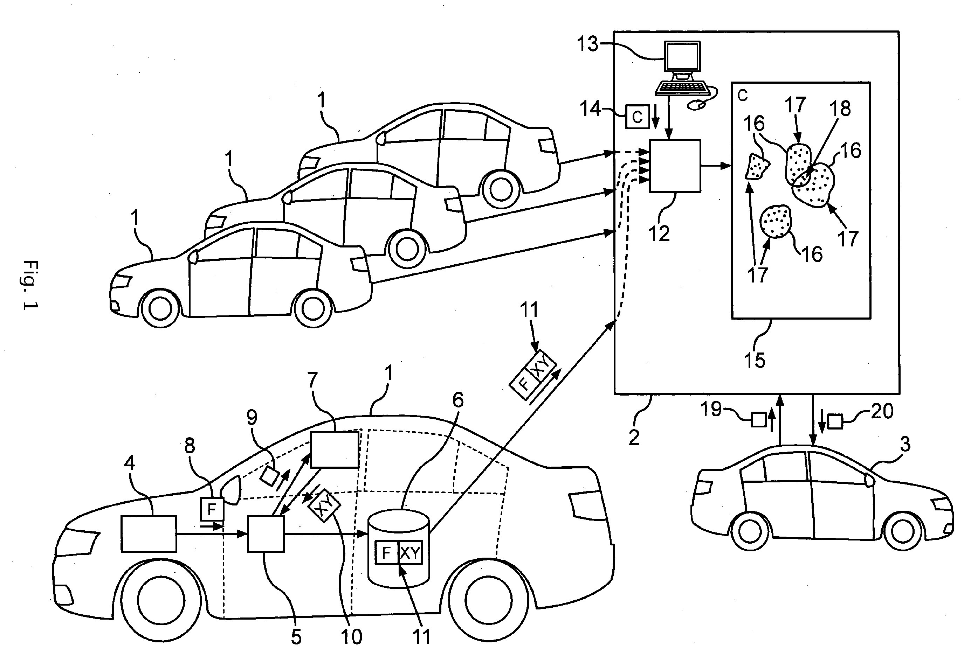

Im Folgenden ist ein Ausführungsbeispiel der Erfindung erläutert. Hierzu zeigt die einzige Fig. eine schematische Darstellung einer Analyseeinrichtung und mehrere Kraftfahrzeuge gemäß einer Ausführungsform des erfindungsgemäßen Kraftfahrzeugs, wobei durch die Analyseeinrichtung und die Kraftfahrzeuge eine Ausführungsform des erfindungsgemäßen Verfahrens durchgeführt wird.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Fig. zeigt mehrere Kraftfahrzeuge 1, von denen jedes jeweils eine Ausführungsform des erfindungsgemäßen Kraftfahrzeugs darstellt. Des Weiteren sind eine Analyseeinrichtung 2 und ein Zielfahrzeug 3 dargestellt.

Im Folgenden ist lediglich ein einzelnes Kraftfahrzeug 1 beschrieben, die übrigen Kraftfahrzeuge 1 können in derselben Weise ausgestaltet sein. Das Kraftfahrzeug 1 kann eine Fahrzeugkomponente 4 aufweisen, bei der es sich beispielsweise um einen Kühlkreislauf oder einen Antriebsmotor handeln kann. Des Weiteren weist das Kraftfahrzeug 1 eine Überwachungseinrichtung 5, einen Fehlerspeicher 6 und einen Lokalisierungseinrichtung 7 auf. Die Lokalisierungseinrichtung 7 kann beispielsweise einen Sensor für ein GNSS, beispielsweise ein GPS, aufweisen. Die Überwachungseinrichtung 5 kann beispielsweise durch einen oder mehrere Sensoren und/oder ein Steuergerät bereitgestellt sein. Das Steuergerät kann beispielsweise über einen Kommunikationsbus, beispielsweise einen CAN-Bus (CAN - Controller Area Network) in an sich bekannter Weise Fehlerdaten 8 von anderen Steuergeräten des Kraftfahrzeugs 1 empfangen, die bei einer Selbstdiagnose die Fehlfunktion F erkannt haben.

In dem veranschaulichten Beispiel wird davon ausgegangen, dass die Fahrzeugkomponente 4 defekt ist, das heißt eine Fehlfunktion aufweist. Grund dafür ist ein Marderbiss, durch welchen die Fahrzeugkomponente 4 beschädigt wurde.

Die Überwachungseinrichtung 5 kann die Fehlfunktionsdaten 8 zu der Fehlfunktion F ermitteln. Beispielsweise kann überwacht werden, ob ein Fluiddruck eines Kühlsystems in einem Sollwertbereich liegt. Bei einer Abweichung des Druckwerts vom Sollwertbereich wird dann auf die Fehlfunktion F rückgeschlossen, das heißt die Fehlerdaten 8 erzeugt. Bei Detektieren der Fehlfunktion F wird durch die Überwachungseinrichtung 5 ein Anforderungssignal 9 an die Lokalisierungseinrichtung 7 ausgesendet.

Die Lokalisierungseinrichtung 7 erzeugt in Abhängigkeit von dem Anforderungssignal 9 Geopositionsdaten 10, die eine Geoposition oder Koordinaten XY des Kraftfahrzeugs 1 angeben, wie sie durch die Lokalisierungseinrichtung 7 ermittelt worden sind. Es kann sich hierbei um aktuelle Koordinaten des Kraftfahrzeugs 1 oder um Koordinaten eines Parkplatzes handeln, an dem das Kraftfahrzeug 1 zuletzt geparkt worden ist. Die Lokalisierungseinrichtung 7 kann hierzu einen Speicher aufweisen, der immer dann aktualisiert wird, wenn das Kraftfahrzeug 1 erneut geparkt wird.

Die Überwachungseinrichtung 5 erzeugt aus den Fehlerdaten 8 und den Geopositionsdaten 10 einen Fehlereintrag 11, der in dem Fehlerspeicher 6 gespeichert wird. Jeder Fehlereintrag 11 gibt somit die Fehlfunktion F und die Geoposition XY an. Bei dem Fehlerspeicher 6 kann es sich um einen an sich aus dem Stand der Technik bekannten Fehlerspeicher zum Speichern von Fehlerdaten handeln, die über einen Kommunikationsbus im Kraftfahrzeug 1 gesammelt werden.

In dem Beispiel sei angenommen, dass ein Fahrer des Kraftfahrzeugs 1 die Fehlfunktion F bemerkt. Beispielsweise kann durch die Überwachungseinrichtung 5 zusätzlich ein (nicht dargestelltes) Warnsignal in dem Kraftfahrzeug 1 erzeugt werden, welches den Fahrer auf die Fehlfunktion F aufmerksam macht. Der Fahrer kann das Kraftfahrzeug 1 aufgrund der Fehlfunktion F in eine Werkstatt gebracht haben. Beispielsweise in der Werkstatt kann durch die Analyseeinrichtung 2 der Fehlerspeicher 6 jedes Kraftfahrzeugs 1 ausgelesen werden, das heißt die Fehlereinträge 11 werden zur Analyseeinrichtung 2 hin übertragen.

Die Analyseeinrichtung 2 kann hierzu mit Auslesegeräten gekoppelt sein, die in mehreren Werkstätten bereitgestellt sein können. Die Analyseeinrichtung 2 kann eine zentrale Recheneinrichtung aufweisen, in welcher die Fehlereinträge 11 aller Kraftfahrzeuge 1 gesammelt werden. Die Analyseeinrichtung 2 kann beispielsweise in der Recheneinrichtung einen Klassifikator 12 aufweisen, welcher jeder Fehlfunktion F eine Auslöserklasse 14 zuordnet. Die Zuordnung kann beispielsweise durch eine Bedienperson erfolgen, für die die Analyseeinrichtung 2 mit einem oder mehreren Eingabeeinrichtungen 13 gekoppelt sein kann. Die Eingabeeinrichtungen 13 können beispielsweise in den Werkstätten bereitgestellt sein.

In dem Beispiel sei des Weiteren angenommen, dass eine Bedienperson erkennt, dass die Fehlfunktion F der Kraftfahrzeuge 1 jeweils durch eine Auslöserklasse 14 ausgelöst wurde, die in dem Beispiel einen Marderbiss C repräsentiert. Die Analyseeinrichtung 2 kann des Weiteren eine digitale Karte 15 aufweisen, in welcher die in den Fehlereinträgen 11 gespeicherten Geopositionen XY eingetragen werden können. Hierbei ist die digitale Karte 15 für eine Auslöserklasse vorgesehen, also beispielsweise die Auslöserklasse "Marderbiss" C. Es werden somit in der digitalen Karte 15 alle Geopositionen XY kartographiert oder eingetragen, die einem Marderbiss zugeordnet sind.

Durch die Analyseeinrichtung können des Weiteren Reviergrenzen 16 ermittelt werden, die jeweils ein Marderrevier 17 abgrenzen. Zusätzlich können Überlappungsbereiche 18 ermittelt werden, welche durch eine Überlappung zweier Marderreviere 17 entstehen. Beim Ermitteln der Reviergrenzen 16 können Verhaltensdaten von Mardern zugrunde gelegt werden.

Ein Fahrer des Zielfahrzeugs 3 ist in dem Beispiel auf der Suche nach einem Parkplatz. Eine Geoposition 19 des Parkplatzes kann beispielsweise auf der Grundlage eines eingegebenen Navigationsziels und/oder einer Fahrergewohnheit des Fahrers des Zielfahrzeugs 3, wie sie in einem Fahrerprofil gespeichert sein kann, oder aufgrund einer Analyse, wie sie aus der angegebenen Druckschrift ermittelt werden kann, bekannt sein.

Die Geoposition 19 des voraussichtlichen Parkplatzes des Zielfahrzeugs 3 kann an die Analyseeinrichtung 2 übermittelt werden. Dies kann beispielsweise über eine Funkverbindung und/oder das Internet erfolgen. Auf Grundlage der digitalen Karte 15 kann durch die Analyseeinrichtung 2 ermittelt werden, ob die Geoposition 19 in einem Mardergebiet liegt. Hierzu ist es nicht nötig, dass an der Geoposition 19 selbst bereits ein Marderbiss stattgefunden haben muss. Das Marderrevier 17 gibt den potentiellen Aktionsbereich eines Marders an. Falls die Geoposition 19 in einem Marderrevier 17 liegt, kann durch die Analyseeinrichtung 2 ein Hinweis 20 erzeugt werden, der an das Zielfahrzeug 3 ausgesendet werden kann. Der Hinweis 20 kann dann in dem Zielfahrzeug 3 dem Fahrer ausgegeben werden. Beispielsweise kann ein optischer Hinweis oder eine Sprachausgabe zum Ausgeben des Hinweises 20 vorgesehen sein.

Durch das Beispiel ist folgendes Prinzip der Erfindung veranschaulicht. Wird in einer Werkstatt erkannt, dass das Fehlverhalten eines Fahrzeugs das Resultat eines Marderbisses ist, wird in einer Datenbank erfasst, wo der Fahrer in der Nacht zuvor das Fahrzeug geparkt hatte. Da Marder nachtaktiv sind, ist dieser Parkplatz die wahrscheinlichste Geoposition, an welcher der Schaden entstanden ist. Hierzu wird bevorzugt die GPS-Position des Kraftfahrzeugs verwendet. Ergibt die Auswertung der Datenbank, dass in einem Gebiet, zum Beispiel auf einem öffentlichen Parkplatz, gehäuft Schäden durch Marderbisse entstanden sind, so wird dieses Gebiet als "gefährdetes Gebiet" für Marderschäden gekennzeichnet.

Plant ein Fahrer eines vernetzten Fahrzeuges, also eines Zielfahrzeuges, sein Fahrzeug in einem gefährdeten Gebiet über Nacht abzustellen, so wird er darüber informiert, dass das Gebiet für Schäden durch Marderbisse bekannt ist. Die Parkabsicht kann über die Erkennung des Parkvorgangs selbst, einen Abgleich mit einem Navigationsziel und/oder einem Abgleichen mit der Uhrzeit erfolgen. In einer besonders vorteilhaften Ausprägung dieser Idee wird in der Datenbank nicht nur die Position von gemeldeten Marderschäden abgelegt, sondern auch ein Abgleich bezüglich Revierverhalten und/oder Reviergrößen von Mardern durchgeführt, so dass überlappende Gebiete als besonders gefährdet eingestuft werden.

Durch diese Idee werden mittels Schwarmdaten gefährdete und besonders gefährdete Gebiete für Schäden durch Marderbisse ermittelt. Diese Information wird Fahrern zur Verfügung gestellt, bevor sie über Nacht parken.

Insgesamt zeigt das Beispiel, wie durch die Erfindung Schwarmdaten zur Vermeidung von Marderschäden bereitgestellt werden können.

## Patentansprüche

1. Verfahren zum geographischen Lokalisieren von Auslösern für Fehlfunktionen (F) in Kraftfahrzeugen (1), mit den Schritten:
für jedes der Kraftfahrzeuge (1):
- Erfassen und Speichern einer während einer Parkphase des Kraftfahrzeugs (1) eingenommenen Geoposition (XY) des Kraftfahrzeugs (1) durch eine Lokalisierungseinrichtung (7) des Kraftfahrzeugs (1);
- Detektieren der Fehlfunktion (F) des Kraftfahrzeugs (1) durch eine Überwachungseinrichtung (5) des Kraftfahrzeugs (1);
- Erzeugen eines die Fehlfunktion (F) beschreibenden Fehlereintrags (11) in einem Fehlerspeicher (6) des Kraftfahrzeugs (1), wobei die Überwachungsvorrichtung (5) die vom Kraftfahrzeug (1) bei einer letzten Parkphase eingenommene Geoposition (XY) in dem Fehlereintrag (11) speichert;
und später bei einer Fehlerdiagnose der Kraftfahrzeuge (1):
- Auslesen der Fehlereinträge (11) aus den Fehlerspeichern (6) der Kraftfahrzeuge (1) durch eine fahrzeugexterne Analyseeinrichtung (2);
- zu jedem Fehlereintrag (11) Empfangen einer den jeweiligen Auslöser der Fehlfunktion (F) beschreibenden Auslöserklasse (14);
- Speichern der während der jeweils letzten Parkphase eingenommenen Geopositionen (XY) der Kraftfahrzeuge (1) mit Fehlfunktionen (F) derselben Auslöserklasse (14) in einer jeweiligen digitalen Karte (15) für die Auslöserklasse (14).

2. Verfahren nach Anspruch 1, wobei die Detektion der Fehlfunktion (F) nach einer Parkphase mit vorbestimmter Mindestdauer durchgeführt wird.

3. Verfahren nach einem der vorhergehenden Ansprüche, wobei die Auslöserklasse (14) über eine Eingabeeinrichtung (13) von einer Bedienperson der Analyseeinrichtung (2) empfangen wird.

4. Verfahren nach einem der vorhergehenden Ansprüche, wobei bei einem Zielfahrzeug (3) eine Parkabsicht erkannt wird und zu einer Geoposition (19) eines voraussichtlichen Parkplatzes in der jeweiligen digitalen Karte (15) zumindest einer Auslöserklasse (14) eine Anwesenheit eines Auslösers detektiert wird und bei anwesendem Auslöser ein Hinweis (20) an das Zielfahrzeug (3) ausgesendet wird.

5. Verfahren nach einem der vorhergehenden Ansprüche, wobei als eine Auslöserklasse (14) Marderbiss (C), der durch einen Marder als Auslöser verursacht wurde.

6. Verfahren nach Anspruch 5, wobei auf der Grundlage einer Clusteranalyse und/oder Verhaltensdaten von Mardern in der digitalen Karte (15) der Auslöserklasse (14) "Marderbiss" (C) eine Reviergrenze (16) eines jeweiligen Marderreviers (17) zumindest eines Marders ermittelt wird und das Marderrevier (17) als Gebiet markiert wird, in welchem ein Auslöser anwesend ist.

7. Verfahren nach Anspruch 6, wobei in der digitalen Karte (15) ein Überlappungsbereich (18) zweier überlappender Marderreviere (17) ermittelt wird und der Überlappungsbereich (18) als Gebiet markiert wird, in welchem ein Risiko für einen Marderbiss größer ist als in einem überlappungsfreien Marderrevier.

8. Kraftfahrzeug (1) mit einer Überwachungseinrichtung (5) zum Detektieren einer Fehlfunktion (F) des Kraftfahrzeugs (1) und einem Fehlerspeicher (6) zum Speichern und Auslesen eines die Fehlfunktion (F) beschreibenden Fehlereintrags (11) und mit einer Lokalisierungseinrichtung (7) zum Erfassen einer während einer Parkphase des Kraftfahrzeugs (1) eingenommenen Geoposition (XY) des Kraftfahrzeugs (1),
**dadurch gekennzeichnet, dass**
die Überwachungseinrichtung (5) dazu ausgelegt ist, bei Detektieren der Fehlfunktion (F) ein Anforderungssignal (9) zu erzeugen,
die Lokalisierungseinrichtung (7) dazu ausgelegt ist, in Abhängigkeit von dem Anforderungssignal (9) eine vom Kraftfahrzeug (1) bei einer letzten Parkphase eingenommene Geoposition (XY) bereitzustellen, und
die Überwachungseinrichtung (5) dazu ausgelegt ist, die vom Kraftfahrzeug (1) bei einer letzten Parkphase eingenommene Geoposition (XY) in dem Fehlereintrag (11) zu speichern.

## Claims

1. Method for geographically locating triggers for malfunctions (F) in motor vehicles (1), comprising the steps:
for each motor vehicle (1):
- Detecting and storing a geoposition (XY) adopted by the motor vehicle (1) during a parking phase of the motor vehicle (1) by means of a localization apparatus (7) of the motor vehicle (1);
- Detecting the malfunction (F) of the motor vehicle (1) by means of a monitoring apparatus (5) of the motor vehicle (1);
- Generating a malfunction entry (11), which describes the malfunction (F), in a malfunction memory (6) of the motor vehicle (1), wherein the monitoring apparatus (5) stores the geoposition (XY) adopted by the motor vehicle (1) during a last parking phase in the malfunction entry (11);
and subsequently, during a malfunction diagnosis of the motor vehicle (1):
- Reading the malfunction entries (11) from the malfunction memories (6) of the motor vehicles (1) by means of an analysis apparatus (2) outside the vehicle;
- For each malfunction entry (11), receiving a trigger class (14), which describes the respective trigger for the malfunction (F);
- Storing the geopositions (XY) adopted by motor vehicles (1) during the last parking phase with malfunctions (F) of the same trigger class (14) in a respective digital map (15) for the trigger class (14).

2. Method according to claim 1, wherein the detection of the malfunction (F) is performed after a parking phase with a predetermined minimum duration.

3. Method according to any of the preceding claims, wherein the trigger class (14) is received via an input apparatus (13) by an operator of the analysis apparatus (2).

4. Method according to any of the preceding claims, wherein a parking intention is detected for a target vehicle (3) and a presence of a trigger is detected at a geoposition (19) of an anticipated parking space in the respective digital map (15) for at least one trigger class (14) and, should a trigger be present, a warning (20) is transmitted to the target vehicle (3).

5. Method according to any of the preceding claims, wherein gnawing damage (C), which has been caused by a rodent as a trigger, is recognised as a trigger class (14).

6. Method according to claim 5, wherein, on the basis of a cluster analysis and/or behavioural data for rodents, a territorial boundary (16) of a respective rodent territory (17) of at least one rodent is determined in the digital map (15) for the trigger class (14) "gnawing damage" (C), and the rodent territory (17) is marked as an area in which a trigger is present.

7. Method according to claim 6, wherein an overlap area (18) of two overlapping rodent territories (17) is determined in the digital map (15) and the overlap area (18) is marked as an area in which a risk of gnawing damage is greater than in an overlap-free area.

8. Motor vehicle (1) having a monitoring apparatus (5) for detecting a malfunction (F) of the motor vehicle (1) and a malfunction memory (6) for storing and reading a malfunction entry (11), which describes the malfunction (F), and having a localization apparatus (7) for detecting a geoposition (XY) adopted by the motor vehicle (1) during a parking phase of the motor vehicle (1),
**characterised in that**
the monitoring apparatus (5) is designed to generate a request signal (9) when the malfunction (F) is detected,
the localization apparatus (7) is designed to provide a geoposition (XY) adopted by the motor vehicle (1) during a last parking phase, on the basis of the request signal (9), and
the monitoring apparatus (5) is designed to store the geoposition (XY) adopted by the motor vehicle (1) during a last parking phase in the malfunction entry (11).

## Revendications

1. Procédé de localisation géographique de causes de mauvais fonctionnements (F) dans des véhicules automobiles (1), comprenant les étapes consistant à :
pour chacun des véhicules automobiles (1) :
- détecter et mémoriser une géoposition (XY) du véhicule automobile (1) prise lors d'une phase de stationnement du véhicule automobile (1) par un dispositif de localisation (7) du véhicule automobile (1) ;
- détecter le mauvais fonctionnement (F) du véhicule automobile (1) par l'intermédiaire d'un dispositif de surveillance (5) du véhicule automobile (1) ;
- générer un enregistrement d'erreur (11) décrivant le mauvais fonctionnement (F) dans une mémoire d'erreurs (6) du véhicule automobile (1), dans lequel le dispositif de surveillance (5) mémorise dans l'entrée d'erreur (11) la géoposition (XY) du véhicule automobile (1) prise lors d'une dernière phase de stationnement ;
et ultérieurement lors d'un diagnostic d'erreur du véhicule automobile (1) :
- lire les enregistrements d'erreur (11) dans les mémoires d'erreurs (6) du véhicule automobile (1) par l'intermédiaire d'un dispositif d'analyse (2) externe au véhicule ;
- pour chaque enregistrement d'erreur (11), recevoir une classe de causes (14) décrivant la cause respective du mauvais fonctionnement (F) ;
- mémoriser la géoposition (XY) du véhicule automobile (1), avec des mauvais fonctionnements (F) de la même classe de causes (14), prise lors de la dernière phase de stationnement respective dans une carte numérique respective (15) pour la classe de causes (14).

2. Procédé selon la revendication 1, dans lequel la détection du mauvais fonctionnement (F) est effectuée après une phase de stationnement avec une durée minimale prédéterminée.

3. Procédé selon l'une quelconque des revendications précédentes, dans lequel la classe de causes (14) est reçue par un opérateur du dispositif d'analyse (2) via un dispositif d'entrée (13).

4. Procédé selon l'une quelconque des revendications précédentes, dans lequel une intention de stationnement est reconnue dans un véhicule cible (3) et une présence d'une cause est détectée pour une géoposition (19) d'une place de stationnement probable dans la carte numérique respective (15) d'au moins une classe de causes (14) et une notification (20) est envoyée au véhicule cible (3) lorsqu'une cause est présente.

5. Procédé selon l'une quelconque des revendications précédentes, comprenant en tant que classe de causes (14), une morsure de martre (C) qui a été provoquée par une martre en tant que cause.

6. Procédé selon la revendication 5, dans lequel sur la base d'une analyse groupée et/ou de données de comportement de martres dans la carte numérique (15) de la classe de causes (14), une « morsure de martre » (C) d'une limite de territoire (16) d'un territoire de martre respectif (17) d'au moins une martre est déterminée, et le territoire de martre (17) est marqué comme une zone dans laquelle une cause est présente.

7. Procédé selon la revendication 6, dans lequel une zone de chevauchement (18) de deux territoires de martre en chevauchement (17) est déterminée sur la carte numérique (15), et la zone de chevauchement (18) est marquée comme une région dans laquelle un risque de morsure de martre est plus important que dans un territoire de martre sans chevauchement.

8. Véhicule automobile (1) avec un dispositif de surveillance (5) pour détecter un mauvais fonctionnement (F) du véhicule automobile (1) et une mémoire d'erreurs (6) pour mémoriser et lire un enregistrement d'erreur (11) décrivant le mauvais fonctionnement (F) et avec un dispositif de localisation (7) pour détecter une géoposition (XY) du véhicule automobile (1) prise lors d'une phase de stationnement du véhicule automobile (1),
**caractérisé en ce que**
le dispositif de surveillance (5) est conçu pour générer un signal de demande (9) lorsque le mauvais fonctionnement (F) est détecté,
le dispositif de localisation (7) est conçu pour fournir une géoposition (XY) prise par le véhicule automobile (1) lors d'une dernière phase de stationnement en fonction du signal de demande (9), et
le dispositif de surveillance (5) est conçu pour mémoriser la géoposition (XY) prise par le véhicule automobile (1) lors d'une dernière phase de stationnement dans l'enregistrement d'erreur (11).
